# FASCICULE DE BREVET EUROPEEN

(11) **EP 2 272 233 B1**
(45) Date de publication et mention de la délivrance du brevet: **25.02.2015**
(21) Numéro de dépôt: 09742285.1
(22) Date de dépôt: 09.04.2009
(51) Int. Cl.: H04N 7/167, H04N 21/2347, H04N 21/266, H04N 21/433, H04N 21/4405, H04N 21/835, H04L 29/06

(54) **PROCEDE DE DIFFUSION DE CONTENU NUMERIQUE, RESEAU ET TERMINAL POUR LA MISE EN OEUVRE DE CE PROCEDE**
VERFAHREN ZUR RUNDSENDUNG DIGITALER INHALTE SOWIE NETZWERK UND ENDGERÄT ZUR ANWENDUNG DIESES VERFAHRENS
METHOD OF BROADCASTING DIGITAL CONTENT, NETWORK AND TERMINAL FOR IMPLEMENTING THIS METHOD

(30) Priorité: 15.04.2008 FR 0802077
(43) Date de publication de la demande: 12.01.2011
(73) Titulaire: ALCATEL LUCENT, 92100 Boulogne-Billancourt (FR)
(72) Inventeur: MOBASSER, Bahman, F-78310 Maurepas (FR)
(74) Mandataire: ALU Antw Patent Attorneys
(86) Numéro de dépôt international: PCT/FR2009/050633
(87) Numéro de publication internationale: WO 2009/136087

(56) Documents cités:
- EP-A- 1 898 599
- WO-A-00/08909
- US-A1- 2004 001 087
- VAISHNAV JANARDHAN AND HENNING SCHULZRINNE: "Peer assisted VoD for set-top box based IP network" P2P-TV'07, [Online] 31 août 2007 (2007-08-31), XP002513057 Kyoto, Japan. Extrait de l'Internet: URL:http://conferences.sigcomm.org/sigcomm /2007/p2p-tv/Peer-Assisted_VoD_Camera_read y4.pdf> [extrait le 2009-02-02]

## Description

L'invention se rapporte au domaine technique des télécommunications.

L'invention concerne plus particulièrement le contrôle de la diffusion de contenus numériques.

En diverses occasions, il est souhaitable d'imposer une date à la diffusion d'informations à un public cible.

Par « information » on désigne ici toute donnée texte et/ou audio et/ou vidéo, que cette donnée soit à vocation commerciale, ludique, scientifique, technique ou autre.

Quelques exemples de ces situations sont présentés ci-dessous.

Un nouveau film ou une nouvelle chanson ne doivent pas être accessibles au public avant la date choisie par l'artiste ou son producteur. Une campagne publicitaire permet alors de susciter un intérêt croissant pour le nouveau produit, qui reste confidentiel jusqu'à la date annoncée. L'écho donné au lancement du produit peut être ainsi maximisé, par les techniques de *buzz marketing.* Les blogues, forums, et sites Internet permettent d'entretenir l'intérêt et la curiosité, des potentiels clients d'un nouveau produit, non encore disponible, mais dont la date et l'heure de mise en ligne sont largement médiatisés.

Une information légale ou réglementaire est généralement rendue accessible à une date fixe à l'ensemble des personnes concernées. Il en va de même, notamment, des rapports financiers des entreprises cotées en bourse, des statistiques concernant l'économie nationale, ou des brevets et demandes de brevet.

Un fournisseur d'informations, par exemple une agence de presse ou un journaliste, peut être contractuellement ou légalement empêché de diffuser une information avant une date prédéterminée.

En cas d'évènement grave, un communiqué, largement diffusé, peut annoncer que des informations importantes seront communiquées ou rendues disponibles à une date précise.

Lorsque de telles situations surviennent, la demande d'informations au jour J sera maximum. Il existe alors un risque, pour le fournisseur d'information, de ne pas être en mesure de satisfaire les demandes.

Lorsque l'information est diffusée par voie électronique, un trop grand nombre de requêtes de téléchargements peut engorger les serveurs. Lorsque l'information est un fichier numérique volumineux (par exemple une vidéo), les capacités du réseau peuvent s'avérer insuffisantes pour répondre à ce pic de requêtes.

Lorsque l'information est disponible sur terminal de communication mobile (PDA, *smartphone*), les risques de saturation sont accrus. En 1995, on dénombrait aux Etats-Unis 34 millions d'abonnés au téléphone mobile (statistiques de la *Cellular Telecommunications and Internet Association*). Actuellement, le nombre d'abonnées au téléphone mobile est estimé à 116 millions aux Etats-Unis.

En cas de saturation, il existe un risque de diffusion partielle et inégalitaire de l'information.

L'état de la technique le plus proche est le document D4.

L'invention vise à pallier ces problèmes techniques en proposant un procédé de diffusion d'informations numériques à date fixe et prédéterminée, ce procédé assurant un accès égalitaire à cette information, indépendamment de la taille du fichier numérique et du débit assuré par le réseau d'accès à ces informations numériques.

L'invention est définie par les revendications indépendantes 1, 6 et 7.

A ces fins, l'invention se rapporte, selon un premier aspect, à un procédé de diffusion d'un contenu numérique, une date étant fixée pour que ce contenu soit rendu accessible à un public cible, ce procédé comprenant la diffusion du contenu numérique vers une mémoire de stockage, avant ladite date, un outil de gestion numérique des droits interdisant l'accès audit contenu et la diffusion, vers le terminal de communication, à ladite date, d'une commande d'ouverture des droits d'accès audit contenu.

Avantageusement, la commande d'ouverture des droits est adressée à un guide électronique des programmes, le contenu numérique étant par exemple une vidéo d'un service de vidéo à la demande.

Avantageusement, au moins une partie du contenu numérique est diffusée via Internet, ou bien par voie hertzienne ou satellite.

En variante ou en combinaison, au moins une partie du contenu numérique est diffusée via un réseau de télécommunications mobile.

Dans une mise en oeuvre, la mémoire de stockage est interne à une passerelle ou noeud de transit à domicile (*residential gateway*).

Dans une autre mise en oeuvre, la mémoire de stockage est interne au terminal de communication.

Dans une mise en oeuvre, le procédé comprend en outre la synchronisation d'affichage, par le terminal de communication, du contenu numérique avec la transmission de ce contenu numérique vers tous les terminaux récepteurs potentiels.

Avantageusement, le contenu numérique diffusé avant ladite date est crypté, la commande d'ouverture des droits d'accès audit contenu comprenant une clé de décryptage.

L'invention se rapporte, selon un deuxième aspect, à un réseau de télécommunications pour la diffusion d'un contenu numérique, une date étant fixée pour que ce contenu soit rendu accessible à un public cible, ce réseau comprenant des moyens de diffusion du contenu numérique vers une mémoire de stockage, avant ladite date, un outil de gestion numérique des droits interdisant l'accès audit contenu, le réseau comprenant en outre des moyens de diffusion, vers le terminal de communication, à ladite date, d'une commande d'ouverture des droits d'accès audit contenu.

L'invention se rapporte, selon un troisième aspect, à un terminal de communication pour la réception d'un contenu numérique, une date étant fixée pour que ce contenu soit rendu accessible à un public cible, ce terminal comprenant des moyens de réception du contenu numérique, avant ladite date, un outil de gestion numérique des droits interdisant l'accès audit contenu ; ce terminal comprenant en outre une mémoire de stockage dudit contenu et des moyens de réception, à ladite date, d'une commande d'ouverture des droits d'accès audit contenu.

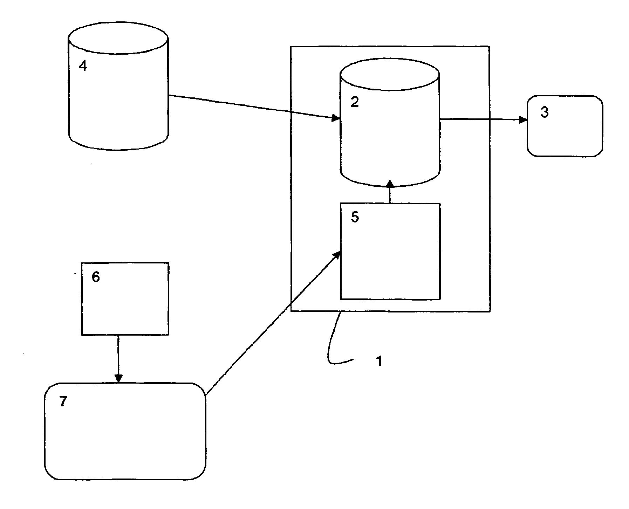

D'autres objets et avantages de l'invention apparaîtront à la lumière de la description suivante de modes de réalisation actuellement préférés, description qui va être effectuée en se référant au dessin annexé.

Dans le mode de réalisation représenté, l'utilisateur est pourvu d'un équipement privé d'abonné 1 (CPE *Customer Premise Equipment*), par exemple un périphérique d'ensemble numérique (*set top box).*

Cet équipement 1 est pourvu d'une mémoire 2, avantageusement une mémoire cache.

Dans une mise en oeuvre, la mémoire cache est interne à une passerelle ou noeud de transit à domicile (*residential gateway*).

Cet équipement 1 est connecté à un moniteur 3 de visualisation, par exemple un écran d'ordinateur ou un téléviseur.

Les contenus média sont adressés à l'équipement 1, depuis une base de données de contenus 4, à une date T1.

La diffusion de ces données est effectuée par voie filaire ou non, le cas échéant en partie par Internet.

La date T1 est différente de celle T2 à laquelle les contenus diffusés seront accessibles à l'utilisateur. Un outil de gestion des droits numériques 5 assure un verrouillage en lecture des contenus diffusés et stockés dans la mémoire 2.

A la date T2 de mise à disposition du public, une commande d'ouverture des droits est adressée à l'équipement. Cette commande provient du fournisseur de services 6.

Dans une mise en oeuvre, lorsque le contenu média est une vidéo à la demande, un guide électronique des programmes 7 permet à l'utilisateur de prendre connaissance des informations suivantes :
- la vidéo est en cours de réception,
- la vidéo sera accessible à compter de la date T2,
- la vidéo a été complètement reçue et est enregistrée en mémoire locale.

Dans un mode de réalisation, un cryptage des contenus enregistrés est supprimé par l'utilisateur, par saisie d'une clé de décryptage adressée par le fournisseur de services. Un message informe l'utilisateur de la réception de cette clé de décryptage.

Dans un mode de réalisation avantageuse, le contenu numérique est une émission de télévision. La charge du réseau peut s'avérer trop forte, lors de la diffusion simultanée de certaines émissions de télévision vers tous les téléspectateurs. Le procédé permet de pallier ce problème en séparant, dans un premier temps, la diffusion des émissions et leur mise à disposition. Plus précisément, l'émission de télévision est livrée à l'usager, sans que celui-ci n'en soit nécessairement averti, et cette émission est stockée dans une mémoire cache, par exemple dans un *residential gateway.* La livraison de l'émission ne s'effectue pas nécessairement par les canaux habituels de diffusion. Par exemple, l'émission peut parvenir à la mémoire cache par voie hertzienne ou satellite. Le contenu reçu est avantageusement crypté. L'émission de télévision est rendue disponible par diffusion d'une clé de décryptage. Lorsque l'usager choisi de voir l'émission lors de sa diffusion en *broadcast,* une synchronisation est effectuée entre l'affichage local de l'émission stockée localement en mémoire cache et la réception du programme broadcast. Ainsi, l'usager a l'impression que l'émission de télévision lui parvient par la voie traditionnelle. La séparation entre temps de transport et mise à disposition d'un contenu numérique est ainsi masquée à l'usager.

L'invention offre de nombreux avantages.

En premier lieu, les contenus numériques les plus populaires, ou ceux pour lesquels un succès important est escompté ou prévisible, peuvent être mis à la disposition des utilisateurs, sans risque d'engorgement des réseaux ou saturation des serveurs par des requêtes de téléchargement trop nombreuses. Par exemple, les contenus média (films, vidéos, clips, chansons) sont diffusés vers les terminaux d'utilisateurs ou acheteurs potentiels lorsque le réseau est peu utilisé, par exemple la nuit.

Si l'utilisateur décide d'acheter une vidéo pour laquelle un grand succès est attendu, par exemple en *pay per view,* il lui suffit d'adresser cette information, à tout moment, à la plateforme de services de VoD (*Video on Demand*), la vidéo étant enregistrée chez l'utilisateur, pour une mise à disposition à une date ultérieure.

Le fournisseur de service a le contrôle de la mémoire de stockage et de l'outil de gestion des droits numériques, dans l'équipement de l'utilisateur. C'est le fournisseur de services qui adresse à l'outil de gestion des droits une commande de mise à disposition d'un contenu numérique, parmi ceux pré enregistrés dans la mémoire.

## Revendications

1. Procédé de diffusion d'un contenu numérique, une date étant fixée pour que ce contenu soit rendu accessible à un public cible, ce procédé incluant
- la diffusion du contenu numérique vers une mémoire de stockage d'un terminal de communication, avant ladite date, un outil de gestion numérique des droits interdisant l'accès audit contenu ;
- la diffusion, vers le terminal de communication, à ladite date, d'une commande d'ouverture des droits d'accès audit contenu ;
ce procédé **caractérisé en ce qu'**il comprend
- la synchronisation d'affichage, par le terminal de communication, du contenu numérique stocké avec la transmission de ce même contenu en broadcast vers d'autres terminaux de communication.

2. Procédé selon la revendication 1, **caractérisé en ce que** la commande d'ouverture des droits est adressée à un guide électronique des programmes.

3. Procédé selon la revendication 1 ou 2, **caractérisé en ce qu'**au moins une partie du contenu numérique est diffusée via Internet ou par diffusion hertzienne ou satellitaire.

4. Procédé selon l'une quelconque des revendications précédentes, **caractérisé en ce qu'**au moins une partie du contenu numérique est diffusée via un réseau de télécommunications mobile.

5. Procédé selon l'une quelconque des revendications précédentes, **caractérisé en ce que** le contenu numérique diffusé avant ladite date est crypté, la commande d'ouverture des droits d'accès audit contenu comprenant une clé de décryptage.

6. Terminal de communication pour la réception d'un contenu numérique, une date étant fixée pour que ce contenu soit rendu accessible à un public cible, ce terminal incluant :
- des moyens de réception du contenu numérique, avant ladite date, un outil de gestion numérique des droits interdisant l'accès audit contenu ;
- une mémoire de stockage dudit contenu ;
- des moyens de réception, à ladite date, d'une commande d'ouverture des droits d'accès audit contenu ;
ce terminal **caractérisé en ce qu'**il comprend
- des moyens de synchronisation d'affichage du contenu numérique stocké avec la transmission de ce même contenu en broadcast vers d'autres terminaux de communication.

7. Réseau de télécommunications pour la diffusion d'un contenu numérique, une date étant fixée pour que ce contenu soit rendu accessible à un public cible, ce réseau incluant:
- au moins un terminal de communication selon la revendication 6,
- des moyens de diffusion du contenu numérique vers ladite mémoire de stockage du terminal de communication, avant ladite date,
- des moyens de diffusion, vers le terminal de communication, à ladite date, d'une commande d'ouverture des droits d'accès audit contenu.

## Patentansprüche

1. Verfahren zur Ausstrahlung eines digitalen Inhalts, wobei ein Datum festgelegt wird, zu welchem dieser Inhalt für ein Zielpublikum zugänglich ist, wobei dieses Verfahren umfasst:
- Ausstrahlen des digitalen Inhalts an einen Speicher eines Kommunikationsendgerätes vor dem besagten Datum, wobei ein Tool zur digitalen Verwaltung der Rechte den Zugriff auf den besagten Inhalt verbietet;
- Ausstrahlen, an dem besagten Datum, eines Befehls zur Freigabe der Zugriffsrichte auf den besagten Inhalt an das Kommunikationsendgerät;
wobei dieses Verfahren **dadurch gekennzeichnet ist, dass** es
- die Synchronisierung, durch das Kommunikationsendgerät, der Anzeige des gespeicherten digitalen Inhalts mit der Übertragung dieses selben Inhalts durch Ausstrahlen an andere Kommunikationsendgeräte
umfasst.

2. Verfahren nach Anspruch 1, **dadurch gekennzeichnet, dass** der Befehl zur Freigabe der Zugriffsrechte auf den Inhalt an einen elektronischen Programmführer adressiert wird.

3. Verfahren nach Anspruch 1 oder 2, **dadurch gekennzeichnet, dass** zumindest ein Teil des digitalen Inhalts über Internet oder durch terrestrische Ausstrahlung oder durch Satellitenausstrahlung verbreitet wird.

4. Verfahren nach einem beliebigen der vorstehenden Ansprüche, **dadurch gekennzeichnet, dass** zumindest ein Teil des digitalen Inhalts über ein mobiles Kommunikationsnetzwerk ausgestrahlt wird.

5. Verfahren nach einem beliebigen der vorstehenden Ansprüche, **dadurch gekennzeichnet, dass** der vor dem besagten Datum ausgestrahlte digitale Inhalt verschlüsselt wird, wobei der Befehl zur Freigabe der Zugriffsrechte auf den besagten Inhalt einen Entschlüsselungsschlüssel umfasst.

6. Kommunikationsendgerät für den Empfang eines digitalen Inhalts, wobei ein Datum festgelegt wird, zu welchem dieser Inhalt für ein Zielpublikum zugänglich ist, wobei dieses Endgerät umfasst:
- Mittel für den Empfang des digitalen Inhalts vor dem besagten Datum, wobei ein Tool zur digitalen Verwaltung der Rechte den Zugriff auf den besagten Inhalt verbietet;
- einen Speicher für den des besagten Inhalt;
- Mittel für den Empfang, an dem besagten Datum, eines Befehls zur Freigabe der Zugriffsrechte auf den besagten Inhalt;
wobei dieses Endgerät **dadurch gekennzeichnet ist, dass** es umfasst:
- Mittel zur Synchronisierung der Anzeige des gespeicherten digitalen Inhalts mit der Übertragung dieses selben Inhalts durch Ausstrahlen an andere Kommunikationsendgeräte.

7. Telekommunikationsnetzwerk zur Ausstrahlung eines digitalen Inhalts, wobei ein Datum festgelegt wird, zu welchem dieser Inhalt für ein Zielpublikum zugänglich ist, wobei dieses Netzwerk umfasst:
- Mindestens ein Kommunikationsendgerät gemäß Anspruch 6,
- Mittel zum Ausstrahlen des digitalen Inhalts an einen Speicher des Kommunikationsendgerätes vor dem besagten Datum,
- Mittel zum Ausstrahlen, an dem besagten Datum, eines Befehls zur Freigabe der Zugriffsrechte auf den besagten Inhalt an das Kommunikationsendgerät.

## Claims

1. A method for distributing a piece of digital content, a date being set for that content to be made available to a target audience, which method includes
- the distribution of the digital content to a storage memory of a communication terminal, before said date, a digital rights management tool prohibiting access to said content;
- the distribution, to the communication terminal, on said date, of a command to open the access rights for accessing said content;
which method is **characterized in that** it comprises
- the communication terminal synchronizing the display of the stored digital content with the transmission of that same content being broadcast to other communication terminals.

2. A method according to claim 1, **characterized in that** the command to open the rights is sent to an electronic program guide.

3. A method according to claim 1 or 2, **characterized in that** at least part of the digital content is distributed via the Internet or by radio or satellite distribution.

4. A method according to any one of the preceding claims, **characterized in that** at least part of the digital content is distributed via a mobile telecommunications network.

5. A method according to any one of the preceding claims, **characterized in that** the digital content distributed prior to said date is encrypted, the command to open the access rights for accessing said content comprising a decryption key.

6. A communication terminal for receiving a piece of digital content, a date being set for that content to be made available to a target audience, which terminal includes
- means of receiving the digital content, prior to said date, a digital rights management tool prohibiting access to said content;
- a storage memory for storing said content;
- means for receiving, on said date, a command to open the access rights for accessing said content;
which terminal is **characterized in that** it comprises
- means of synchronizing the display of the stored digital content with the transmission of that same content being broadcast to other communication terminals.

7. A telecommunication network for distributing a piece of digital content, a date being set for that content to be made available to a target audience, which network includes
- at least one communication terminal according to claim 6, means of distributing the digital content to said storage memory of the communication terminal, before said date,
- means of distributing, to the communication terminal, on said date, a command to open the access rights for accessing said content.
